# EUROPÄISCHE PATENTSCHRIFT

(11) **EP 1 529 144 B1**
(45) Veröffentlichungstag und Bekanntmachung des Hinweises auf die Patenterteilung: **08.03.2006**
(21) Anmeldenummer: 03735436.2
(22) Anmeldetag: 22.05.2003
(51) Int. Cl.: E05B 47/00, E05B 65/12, B64C 1/14

(54) **VERRIEGELUNGSEINRICHTUNG FÜR FAHRZEUGE, INSBESONDERE FÜR FLUGZEUGE**
LOCKING DEVICE FOR VEHICLES, ESPECIALLY FOR AEROPLANES
DISPOSITIF DE VERROUILLAGE DESTINE A DES VEHICULES, NOTAMMENT A DES AVIONS

(30) Priorität: 15.08.2002 DE 10238153
(43) Veröffentlichungstag der Anmeldung: 11.05.2005
(73) Patentinhaber: Wittenstein AG, 97999 Igersheim (DE)
(72) Erfinder: DECKER, Walter, E., 91575 Windsbach (DE); ECK, Alexander, 97957 Poppenhausen (DE); SCHMITT, Klaus, Dieter, 97078 Würzburg (DE); MEHRING, Jörg-Peter, 97285 Tauberrettersheim (DE)
(74) Vertreter: Weiss, Peter
(86) Internationale Anmeldenummer: PCT/EP2003/005363
(87) Internationale Veröffentlichungsnummer: WO 2004/018805

(56) Entgegenhaltungen:
- US-A- 4 289 996
- US-A- 4 915 326
- US-B1- 6 310 455

## Beschreibung

Die Erfindung betrifft eine Verriegelungseinrichtung für Fahrzeuge, insbesondere für Flugzeuge mit einem aktiv angetriebenen Antriebselement mit Antriebswelle und einer daran direkt oder indirekt anschliessenden Abtriebswelle.

Herkömmlich sind Verriegelungseinrichtungen bekannt, die aus einem Motorelement, anschliessendem aufwendigen Getriebeelement und daran anschliessender redundanter mechanischer Feder Türen, Flugzeugtüren od. dgl. verriegeln und/oder entriegeln. Derartige Verriegelungseinrichtungen bilden ein Sicherheitsmechanismus und betätigen mechanisch auf entsprechende Signale hin entsprechende Sicherungsriegel od. dgl.. Nachteilig an herkömmlichen Verriegelungseinrichtungen ist, dass diese sehr schwer, aufwendig herzustellen und sehr wartungsintensiv zu betreiben sind. Zudem sind diese teilweise unzuverlässig, was unerwünscht ist. Diese benötigen ferner einen grossen Einbauraum, was ebenfalls bei sehr hohem Eigengewicht unerwünscht ist.

Die US 6,310,455 B1 offenbart einen Positionier- und Stellantrieb, der mit einem Gleichstrom-Elektromotor arbeitet. Dort ist koaxial in einem Stator drehbar ein Rotor gelagert, der ein Getriebe antreibt. Dabei sind dem Getriebe und dem Motor entsprechende Positionswinkelgeber, Motorwinkelgeber zugeordnet, welche die Position exakt erkennen und feststellen.

Der vorliegenden Erfindung liegt daher die Aufgabe zugrunde, eine Verriegelungseinrichtung der eingangs genannten Art zu schaffen, welche die genannten Nachteile beseitigt und mit welcher die Zuverlässigkeit sowie die Bedienbarkeit der Verriegelungseinrichtungen wesentlich verbessert werden soll. Zudem sollen Fertigungskosten, Wartungskosten bei reduziertem Eigengewicht, eingespart werden.

Zur Lösung dieser Aufgabe führten die Merkmale der Patentansprüche 1 und 2.

Der vorliegenden Erfindung ist ein Antriebselement, beispielsweise als Elektromotor ausgebildet, kann jedoch auch pneumatischer, hydraulischer oder elektromechanischer Art sind. Hierauf sei die vorliegende Erfindung nicht beschränkt.

Dabei hat sich als besonders vorteilhaft bei der vorliegenden Erfindung erwiesen, insbesondere zur Erhöhung der Zuverlässigkeit eine magnetisch bedingte Rückstellung von Abtriebswelle oder Antriebswelle bei Ausfall oder bei Abschalten des Antriebselementes in eine Ruhe- oder Sicherstellung vorzusehen, die wählbar ist. Die Verriegelungseinrichtung ist daher bevorzugt aus zwei Komponenten aufgebaut, mit einem aktiven Antriebselement und einem passiven Teil, welche miteinander gekoppelt sind. Der passive Teil ist ausgebildet aus zwei Permanentmagneten, wobei der eine Permanentmagnet mit der Antriebs- und/oder Abtriebswelle und der andere Permanentmagnet fest mit dem Gehäuse in Verbindung steht. Vorzugsweise stehen die beiden Permanentmagneten miteinander in Eingriff, so dass insbesondere bei Ausfall des Antriebselementes die Antriebs- oder Abtriebswelle in eine Sicherungslage automatisch mechanisch bewegbar ist. Das Antriebselement kann die Antriebswelle oder Abtriebswelle in unterschiedlichen wählbaren, präzise einstellbaren Winkeln bis zu 360° gegen hier nicht dargestellte Anschläge bzw. Hartanschläge bewegen. Wird das aktive Antriebselement deaktiviert, so sorgen die passiven Permanentmagneten dafür, dass der Wellenabgang bzw. die Abtriebswelle in ihre ursprüngliche Ausgangslage zurückgestellt wird. Bevorzugt sind die beiden Permanentmagneten des passiven Teils als Stator und Rotor ausgebildet, wobei ein magnetisches Rückstellmoment dazwischen erzeugt wird. Dies trägt erheblich zur Sicherheit und Zuverlässigkeit der Verriegelungseinrichtung im Betrieb, insbesondere von Flugzeugtüren bei.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 einen schematisch dargestellten Längsschnitt durch eine erfindungsgemässe Verriegelungseinrichtung für Fahrzeuge;
Figur 2 einen schematisch dargestellten Längsschnitt durch ein weiteres Ausführungsbeispiel einer Verriegelungseinrichtung gemäss Figur 1;
Figur 3 einen schematisch dargestellten Längsschnitt durch ein weiteres Ausführungsbeispiel der Verriegelungseinrichtung gemäss Figur 2.

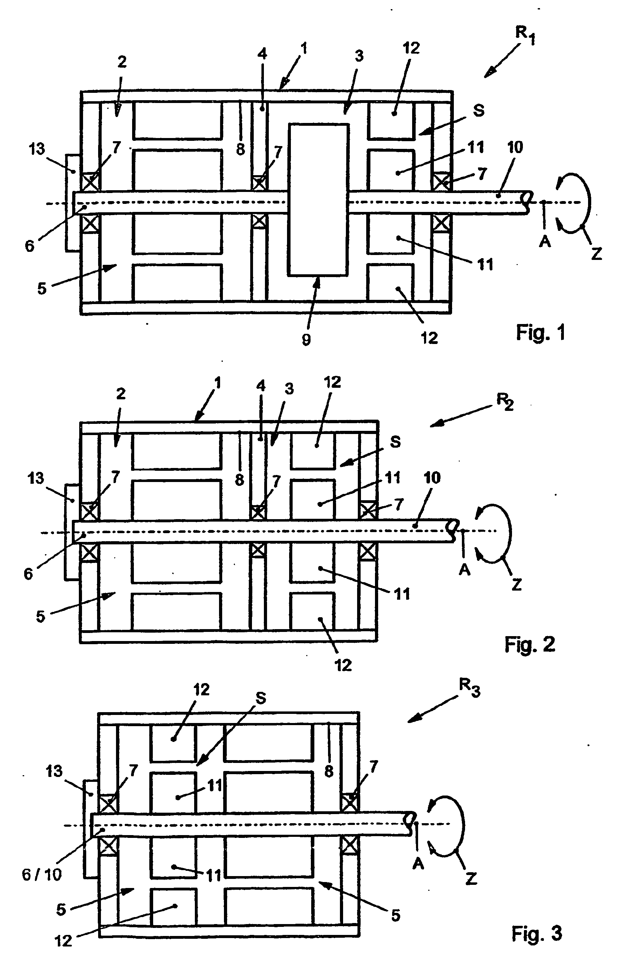

Gemäss Figur 1 weist eine erfindungsgemässe Verriegelungseinrichtung R₁ für Fahrzeuge, insbesondere Flugzeuge ein Gehäuse 1 auf, welches im vorliegenden Ausführungsbeispiel in einen ersten Teil 2 und einen zweiten Teil 3 über eine Trennwand 4 unterteilt ist. Innerhalb des ersten Teiles 2 des Gehäuses 1 ist ein Antriebselement 5, vorzugsweise als Elektromotor ausgebildet, auf einer Antriebswelle 6 aufgesetzt. Die Antriebswelle 6 ist über Lager 7 gelagert. Innerhalb einer Zylinderinnenwand 8 des Gehäuses 1 sitzt im bevorzugten Ausführungsbeispiel der aktive Teil des Antriebselementes 5, welcher vorzugsweise als elektrisch betriebener Motor ausgebildet ist. Es soll jedoch auch im Rahmen der vorliegenden Erfindung liegen, zumindest teilweise eine Drehbewegung der Antriebswelle 6 aktiv auch durch pneumatisch oder hydraulisch betriebene Motoreleacente zu erzeugen. Hierauf ist die vorliegende Erfindung nicht beschränkt.

Im Anschluss an die Antriebswelle 6 schliesst im zweiten Gehäuseteil 3 ein Getriebeelement 9 dem Antriebselement 5, insbesondere der Antriebswelle 6 an. Vorzugsweise ist das Getriebeelement 9 als Planetengetriebe mit Sonnenrad und Sonnenräder ausgebildet. An das Getriebeelement 9 schliesst die Abtriebswelle 10 an. Die Abtriebswelle 10 wird, insbesondere bei der Verriegelungseinrichtung R₁ um eine Achse A in wählbaren bestimmten Winkeln verschwenkt, um entsprechende, hier nicht dargestellte Verriegelungselemente mit Schieber od. dgl. zu betätigen. Fällt beispielsweise das Antriebselement 5 aus, beispielsweise durch Stromausfall oder durch Ausfall einer Hydraulikpumpe, so ist wichtig bei der vorliegenden Erfindung, dass sich die Abtriebswelle 10 in ihre ursprüngliche Ausgangslage zur Sicherung eines bestimmten Verriegelungszustandes zurückbewegt. Hierzu hat sich als besonders vorteilhaft bei der vorliegenden Erfindung erwiesen, der Abtriebswelle 10 einen inneren Permanentmagneten 11 zuzuordnen, welcher fest auf der Abtriebswelle 10 aufsitzt. In etwa axial in gleicher Höhe sitzt innerhalb der Zylinderinnenwand 8 ein weiterer Permanentmagnet 12 fest mit dem Gehäuse 1 verbunden. Zwischen Permanentmagnet 11 und Permanentmagnet 12 ist ein Spalt S gebildet.

Es ist zumindest ein Permanentmangnet 11, vorzugsweise sind eine Mehrzahl von Permanentmangneten 11 radial verteilt der Abtriebswelle 10 fest zugeordnet, welche mit zumindest einem passiven äusseren Permanentmagneten 12 des Gehäuses 1 zusammenwirken. Fällt beispielsweise das Antriebselement 5 aus oder wird abgeschaltet, so wird über den magnetischen Fluss zwischen den Permanentmangneten 11 und 12 die Abtriebswelle 10 in eine wählbare Ruhe- oder Sicherheitslage zurückverdreht und sichert beispielsweise eine Verriegelung einer Flugzeugtür od. dgl..
Ferner soll im Rahmen der vorliegenden Erfindung liegen dass auf der Antriebswelle 6 und/oder Abtriebswelle 10 anstelle der Permanentmagneten 11 Elemente aus Metall od. dgl. angeordnet sind, die dann mit Permanentmagneten 12 zusammenwirken.

Auf diese Weise lässt sich die Sicherheit, insbesondere die Betriebssicherheit von Verriegelungseinrichtungen erheblich erhöhen.

In einem weiteren Ausführungsbeispiel der vorliegenden Erfindung gemäss Figur 2 ist eine Verriegelungseinrichtung R₂ aufgezeigt, bei welcher die Verrriegelungseinrichtung R₂ aus den Bauteilen Gehäuse 1, Antriebselement 5, Antriebswelle 6 und Abtriebswelle 10 gebildet sind. Das Getriebeelement 9 entfällt bei diesem Ausführungsbeispiel. Dabei fallen Antriebswelle 6 und Abtriebswelle 10 zusammen. Im vorliegenden Ausführungsbeispiel kann unmittelbar dem Antriebselement. 5, insbesondere der Antriebswelle 6 und Abtriebswelle 10 zumindest ein Permanentmagnet 11 zugeordnet sein, welcher mit zumindest einem radial fluchtenden, der Zylinderinnenwand 8 zugeordneten äusseren Permanentmagenten 12 in oben beschriebener Weise zusammenwirkt, um beispielsweise bei Ausfall des Antriebselementes 5 die Antriebswelle 6 bzw. Abtriebswelle 10 in eine wählbare Sicherungs- oder Ausgangslage zurück zu bewegen. Dabei soll auch hier im Rahmen der vorliegenden Erfindung liegen, das der Permanentmagnet 12 bzw. 11 Bestandteil des Antriebselementes 5 sein kann.

In dem Ausführungsbeispiel der vorliegenden Erfindung gemäss Figur 3 ist eine Verriegelungseinrichtung R₃ aufgezeigt, bei welcher lediglich im Vergleich zum Ausführungsbeispiel gemäss Figur 2 die Permanentmagneten 11 und 12 dem Antriebselement 5 vorgeschaltet bzw. vorgesetzt sind.

Ferner soll im Rahmen der vorliegenden Erfindung liegen, dass zumindest ein Sensor 13 vorgesehen ist, um Endlagen der Antriebs- und/oder Abtriebswelle 6, 10 zu erkennen. Zur Begrenzung der Drehbewegung von Antriebswelle 6 und/oder Abtriebswelle 10 können hier nicht dargestellte Anschlagelemente od. dgl. vorgesehen sein.

**Positionszahlenliste**

| | | | | | |
|---|---|---|---|---|---|
| 1 | Gehäuse | 34 | | 67 | |
| 2 | Teil | 35 | | 68 | |
| 3 | Teil | 36 | | 69 | |
| 4 | Trennwand | 37 | | 70 | |
| 5 | Antriebselement | 38 | | 71 | |
| 6 | Antriebswelle | 39 | | 72 | |
| 7 | Lager | 40 | | 73 | |
| 8 | Zylinderinnenwand | 41 | | 74 | |
| 9 | Getriebeelement | 42 | | 75 | |
| 10 | Abtriebswelle | 43 | | 76 | |
| 11 | Permanentmagnet | 44 | | 77 | |
| 12 | Permanentmagnet | 45 | | 78 | |
| 13 | Sensor | 46 | | 79 | |
| 14 | | 47 | | | |
| 15 | | 48 | | R₁ | Verriegelung |
| 16 | | 49 | | R₂ | Verriegelung |
| 17 | | 50 | | R₃ | Verriegelung |
| 18 | | 51 | | | |
| 19 | | 52 | | A | Achse |
| 20 | | 53 | | S | Spalt |
| 21 | | 54 | | Z | Drehrichtung |
| 22 | | 55 | | | |
| 23 | . | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Verriegelungseinrichtung für Fahrzeuge, insbesondere für Flugzeuge mit einem aktiv angetriebenen Antriebselement (5) mit Antriebswelle (6) und einer daran direkt oder indirekt anschliessenden Abtriebswelle (10),
**dadurch gekennzeichnet,**
**dass** der Antriebswelle (6) oder der Abtriebswelle (10) zumindest ein Permanentmagnet (11) zugeordnet ist, welcher mit zumindest einem weiteren externen feststehenden Element (12), insbesondere Permanentmagneten (12) zusammenwirkt, und der äussere Permanentmagnet (12) der Abtriebswelle (10) oder die Antriebwelle (6) durch Zusammenwirken mit dem auf dieser angeordneten Permanentmagneten (11) die Antriebswellen (6) bzw. die Abtriebswelle (10) in einer definierbaren und einstellbaren Ruhelage, insbesondere Sicherungslage hält, oder in diese zurückbewegt.

2. Verriegelungseinrichtung für Fahrzeuge, insbesondere für Flugzeuge mit einem aktiv angetriebenen Antriebselement (5) mit Antriebswelle (6) und einer daran direkt oder indirekt anschliessenden Abtriebswelle (10),
**dadurch gekennzeichnet,**
**dass** der Antriebswelle (6) oder der Abtriebswelle (10) zumindest ein Element (11), insbesondere Permanentmagneten (11) zugeordnet ist, welches mit zumindest einem weiteren externen feststehenden Permanentmagneten (12) zusammenwirkt, und der äussere Permanentmagnet (12) der Abtriebswelle (10) oder die Antriebwelle (6) durch Zusammenwirken mit dem auf dieser angeordneten Permanentmagneten (11) die Antriebswellen (6) bzw. die Abtriebswelle (10) in einer definierbaren und einstellbaren Ruhelage, insbesondere Sicherungslage hält, oder in diese zurückbewegt.

3. Verriegelungseinrichtung nach Anspruch 1 oder 2, **dadurch gekennzeichnet, dass** das elektrisch angetriebene Antriebselement (5) in einem Gehäuse (1) angeordnet ist und innerhalb des Gehäuses (1) auf Antriebswelle (6) oder Abtriebswelle (10) der zumindest eine Permanentmagnet (11) vorgesehen ist, und mit dem weiteren Permanentmagneten (12), der innerhalb des Gehäuses (1) an der Zylinderinnenwand (8) festgelegt ist, zusammenwirkt.

4. Verriegelungseinrichtung nach Anspruch 3, **dadurch gekennzeichnet, dass** der äussere Permanentmagnet (12) innen an der Zylinderwand (8) festgelegt ist und zwischen den beiden Permanentmagneten (11, 12) ein Spalt (S) gebildet ist.

5. Verriegelungseinrichtung nach wenigstens einem der Ansprüche 1 bis 4, **dadurch gekennzeichnet, dass** das Gehäuse (1) in zwei Teile (2, 3) unterteilt und in dem ersten Teil (2) das Antriebselement (5) und im zweiten Teil (3) der Permanentmagnet (11, 12) vorgesehen ist.

6. Verriegelungseinrichtung nach wenigstens einem der Ansprüche 1 bis 5, **dadurch gekennzeichnet, dass** der Antriebswelle (6) oder Abtriebswelle (10) zur Endlagenermittlung zumindest ein Sensorelement (13) zugeordnet ist.

7. Verriegelungseinrichtung nach wenigstens einem der Ansprüche 1 bis 6, **dadurch gekennzeichnet, dass** zwischen Antriebswelle (6) und Abtriebswelle (10) ein Getriebeelement (9), insbesondere ein Planetengetriebe dazwischengeschaltet ist.

8. Verriegelungseinrichtung nach wenigstens einem der Ansprüche 1 bis 7, **dadurch gekennzeichnet, dass** bei Stromausfall der äussere Permanentmagnet (12) auf den inneren Permanentmagnet (11) einwirkt und Antriebswelle (6) oder Abtriebswelle (10) in eine einstellbare und wählbare Sicherungslage oder Ruhelage verdreht.

9. Verriegelungseinrichtung nach wenigstens einem der Ansprüche 1 bis 8, **dadurch gekennzeichnet, dass** über die beiden Permanentmagnete (11, 12), insbesondere bei Stromausfall oder bei Deaktivierung des Antriebselementes (5) eine automatische Rückstellung der Antriebswelle (6) oder Abtriebswelle (10) in ihre wählbare Ausgangs- oder Sicherungslage erfolgt.

10. Verriegelungseinrichtung nach wenigstens einem der Ansprüche 1 bis 9, **dadurch gekennzeichnet, dass** das Antriebselement (5) als Elektromotor, pneumatischer oder hydraulischer Antrieb ausgebildet ist.

11. Verriegelungseinrichtung nach wenigstens einem der Ansprüche 1 bis 10, **dadurch gekennzeichnet, dass** der äussere Permanentmagnet (12) dem Antriebselement (5) vorgesetzt oder nachgesetzt oder in diesem enthalten ist.

12. Verriegelungseinrichtung nach wenigstens einem der Ansprüche 1 bis 11, **dadurch gekennzeichnet, dass** der innere und der äussere Permanentmagnet (11, 12) dem Getriebeelement (9) im Bereich der Abtriebswelle (10) nachgeschaltet ist.

## Claims

1. Locking apparatus for vehicles, more especially for aircraft, having an actively driven drive element (5), with an input shaft (6) and an output shaft (10) directly or indirectly communicating therewith, **characterised in that** the input shaft (6) or the output shaft (10) has at least one permanent magnet (11) associated therewith, which magnet co-operates with at least one additional external fixed element (12), more especially a permanent magnet (12), and the outer permanent magnet (12) of the output shaft (10) or the input shaft (6), by co-operating with the permanent magnet (11) disposed thereon, retains the input shaft (6) or respectively the output shaft (10) in a definable and adjustable inoperative position, more especially a safety position, or returns it into said inoperative position.

2. Locking apparatus for vehicles, more especially for aircraft, having an actively driven drive element (5), with an input shaft (6) and an output shaft (10) directly or indirectly communicating therewith, **characterised in that** the input shaft (6) or the output shaft (10) has at least one element (11), more especially a permanent magnet (11), associated therewith, which element co-operates with at least one additional external fixed permanent magnet (12), and the outer permanent magnet (12) of the output shaft (10) or the input shaft (6), by co-operating with the permanent magnet (11) disposed thereon, retains the input shaft (6) or respectively the output shaft (10) in a definable and adjustable inoperative position, more especially a safety position, or returns it into said inoperative position.

3. Locking apparatus according to claim 1 or 2, **characterised in that** the electrically driven drive element (5) is disposed in a housing (1), and the at least one permanent magnet (11) is provided internally of the housing (1) on input shaft (6) or output shaft (10), and co-operates with the additional permanent magnet (12), which is secured internally of the housing (1) on the internal cylinder wall (8).

4. Locking apparatus according to claim 3, **characterised in that** the outer permanent magnet (12) is secured internally on the cylinder wall (8), and a gap (S) is formed between the two permanent magnets (11, 12).

5. Locking apparatus according to at least one of claims 1 to 4, **characterised in that** the housing (1) is divided into two parts (2, 3), and the drive element (5) is provided in the first part (2), and the permanent magnet (11,12) is provided in the second part (3).

6. Locking apparatus according to at least one of claims 1 to 5, **characterised in that** the input shaft (6) or output shaft (10) has at least one sensor element (13) associated therewith for determining the end position.

7. Locking apparatus according to at least one of claims 1 to 6, **characterised in that** a transmission element (9), more especially a planetary gear, is interposed between input shaft (6) and output shaft (10).

8. Locking apparatus according to at least one of claims 1 to 7, **characterised in that**, in the event of a power failure, the outer permanent magnet (12) acts upon the inner permanent magnet (11) and rotates input shaft (6) or output shaft (10) into an adjustable and selectable safety position or inoperative position.

9. Locking apparatus according to at least one of claims 1 to 8, **characterised in that**, more especially in the event of a power failure or whilst deactivating the drive element (5), an automatic resetting of the input shaft (6) or output shaft (10) into its selectable initial or safety position is effected via the two permanent magnets (11, 12).

10. Locking apparatus according to at least one of claims 1 to 9, **characterised in that** the drive element (5) is in the form of an electromotor, or a pneumatic or hydraulic drive.

11. Locking apparatus according to at least one of claims 1 to 10, **characterised in that** the outer permanent magnet (12) is placed in front of or after the drive element (5) or is contained therein.

12. Locking apparatus according to at least one of claims 1 to 11, **characterised in that** the inner and outer permanent magnets (11, 12) are connected to the output end of the transmission element (9) in the region of the output shaft (10).

## Revendications

1. Dispositif de verrouillage destiné à des véhicules, en particulier à des avions, avec un élément d'entraînement à entraînement actif (5) avec un arbre d'entraînement (6) et un arbre de sortie (10) suivant directement ou indirectement,
**caractérisé par le fait que**
à l'arbre d'entraînement (6) ou à l'arbre de sortie (10) est associé au moins un aimant permanent (11) qui coopère avec au moins un autre élément stationnaire extérieur (12), en particulier un aimant permanent (12), et que l'aimant permanent extérieur (12) de l'arbre de sortie (10) ou l'arbre d'entraînement (6) maintient, par coopération avec l'aimant permanent (11) disposé sur ce dernier, les arbres d'entraînement (6) ou l'arbre de sortie (10) en une position de repos définissable ou réglable et, en particulier, en une position de sécurité, ou les ramène dans cette dernière.

2. Dispositif de verrouillage destiné à des véhicules, en particulier à des avions, avec un élément d'entraînement à entraînement actif (5) avec un arbre d'entraînement (6) et un arbre de sortie (10) suivant directement ou indirectement,
**caractérisé par le fait que**
à l'arbre d'entraînement (6) ou à l'arbre de sortie (10) est associé au moins un élément (11), en particulier un aimant permanent (11), qui coopère avec au moins un autre aimant permanent stationnaire extérieur (12), et que l'aimant permanent extérieur (12) de l'arbre de sortie (10) ou l'arbre d'entraînement (6) maintient, par coopération avec l'aimant permanent (11) disposé sur ce dernier, les arbres d'entraînement (6) ou l'arbre de sortie (10) en une position de repos définissable ou réglable, en particulier en une position de sécurité, ou les ramène dans cette dernière.

3. Dispositif de verrouillage selon la revendication 1 ou 2, **caractérisé par le fait que** l'élément d'entraînement (5) à entraînement électrique est disposé dans un boîtier (1) et que l'au moins un aimant permanent (11) est prévu à l'intérieur du boîtier (1), sur l'arbre d'entraînement (6) ou l'arbre de sortie (10), et coopère avec l'autre aimant permanent (12) qui est fixé, à l'intérieur du boîtier (1), à la paroi intérieur cylindrique (8).

4. Dispositif de verrouillage selon la revendication 3, **caractérisé en ce que** l'aimant permanent extérieur (12) est fixé à l'intérieur à la paroi cylindrique (8) et qu'entre les deux aimants permanents (11, 12) est formé un entrefer (S).

5. Dispositif de verrouillage selon au moins l'une des revendications 1 à 4,
**caractérisé par le fait que** le boîtier (1) est subdivisé en deux parties (2, 3) et que dans la première partie (2) est prévue l'élément d'entraînement (5) et dans la deuxième partie (3) est prévu l'aimant permanent (11, 12).

6. Dispositif de verrouillage selon au moins l'une des revendications 1 à 5, **caractérisé par le fait qu'**à l'arbre d'entraînement (6) ou à l'arbre de sortie (10) est associée, pour déterminer la position de fin de course, au moins un élément capteur (13).

7. Dispositif de verrouillage selon au moins l'une des revendications 1 à 6, **caractérisé par le fait qu'**entre l'arbre d'entraînement (6) et l'arbre de sortie (10) est connecté un élément d'engrenage (9), en particulier un engrenage planétaire.

8. Dispositif de verrouillage selon au moins l'une des revendications 1 à 7, **caractérisé par le fait qu'**en cas de coupure de courant, l'aimant permanent extérieur (12) agit sur l'aimant permanent intérieur (11) et déplace l'arbre d'entraînement (6) ou l'arbre de sortie (10) en une position de sécurité ou position de repos réglable et sélectionnable.

9. Dispositif de verrouillage selon au moins l'une des revendications 1 à 8, **caractérisé par le fait que** par l'intermédiaire des deux aimants permanents (11, 12), en particulier en cas de coupure de courant ou en cas de désactivation de l'élément d'entraînement (5), a lieu un rappel automatique de l'arbre d'entraînement (6) ou de l'arbre de sortie (10) dans sa position de sortie ou de sécurité sélectionnable.

10. Dispositif de verrouillage selon au moins l'une des revendications 1 à 9, **caractérisé par le fait que** l'élément d'entraînement (5) est réalisé sous forme de moteur électrique, d'entraînement pneumatique ou hydraulique.

11. Dispositif de verrouillage selon au moins l'une des revendications 1 à 10, **caractérisé par le fait que** l'aimant permanent extérieur (12) est placé avant ou après l'élément d'entraînement (5) ou est contenu dans ce dernier.

12. Dispositif de verrouillage selon au moins l'une des revendications 1 à 11, **caractérisé par le fait que** les aimants permanents intérieur et extérieur (11, 12) sont connectés après l'élément d'engrenage (9) à l'endroit de l'arbre de sortie (10).
